# EUROPÄISCHE PATENTSCHRIFT

(11) **EP 1 245 618 B1**
(45) Veröffentlichungstag und Bekanntmachung des Hinweises auf die Patenterteilung: **03.08.2005**
(21) Anmeldenummer: 02005256.9
(22) Anmeldetag: 11.03.2002
(51) Int. Cl.: C08J 5/18, C08K 3/22

(54) **Weisse, biaxial orientierte Folie aus einem kristallisierbaren Thermoplasten mit guter Schneidbarkeit**
White biaxially orineted film made from a crystallizable thermoplastic with good cuttability
Feuille blanche à orientation biaxialement, à base d'un thermoplastique crystallisable ayant une découpabilité

(30) Priorität: 15.03.2001 DE 10112492
(43) Veröffentlichungstag der Anmeldung: 02.10.2002
(73) Patentinhaber: Mitsubishi Polyester Film GmbH, 65203 Wiesbaden (DE)
(72) Erfinder: Murschall, Ursula, Dr., 55283 Nierstein (DE); Kern, Ulrich, Dr., 55218 Ingelheim (DE); Oberländer, Klaus, Dipl.-Ing., 65207 Wiesbaden (DE); Kiehne, Thorsten, Dr., 65185 Wiesbaden (DE)
(74) Vertreter: Plate, Jürgen, Dr.

(56) Entgegenhaltungen:
- EP-A- 0 791 680
- EP-A- 0 942 031
- WO-A-95/10563
- WO-A-96/15906
- US-A- 5 660 931

## Beschreibung

Die Erfindung betrifft eine weiße, biaxial orientierte Folie mit guter Schneidbarkeit aus einem kristallisierbaren Thermoplasten, deren Dicke im Bereich von 10 bis 500 µm liegt. Sie enthält mindestens ein Titandioxid vom Anatas-Typ als Pigment und einen optischen Aufheller und zeichnet sich durch einen hohen Weißgrad aus. Alle derartigen Folien zeichnen sich durch eine wirtschaftliche Thermoformbarkeit, eine gute Verstreckbarkeit und durch sehr gute optische und mechanische Eigenschaften in Kombination mit einer guten Schneidbarkeit aus. Die Erfindung betrifft ferner ein Verfahren zur Herstellung dieser Folie und ihre Verwendung.

Weiße Folien mit einer Dicke zwischen 10 und 500 µm sind hinreichend bekannt. Der Weißgrad dieser bekannten Folien liegt in aller Regel bei ≤ 80%. Die Folien weisen jedoch eine unerwünschte Gelbstichigkeit auf, d.h. die Folien sind nicht strahlend weiß. Beispielsweise liegt der Gelbwert, der dickenabhängig ist, bei 10 bis 100 µm dicken Folien bei > 45. Schneidwerkzeuge, die beim Verarbeiten der Folie eingesetzt werden, verschleißen im allgemeinen rasch.

In der WO 96/15906 ist eine zweilagige, weiße, biaxial orientierte Polymerfolie beschrieben, die sich für Metall-Polymer-Laminate zur Herstellung von Dosen eignet. Insbesondere sollen die mit der Polymerfolie ausgerüsteten Laminate den Verschleiß an Dosen-Formwerkzeugen reduzieren. Als Folienrohstoff wird ein Polyethylenterephthalat verwendet, das bevorzugt ein Homopolymer aus 100 mol-% Ethylenterephthalat-Einheiten ist und als Füllstoff Titandioxid vom Rutil- oder Anatas-Typ enthält. Zusätzlich zu dem Titandioxid enthält die Polymerfolie ggf. geringe Mengen an optischen Aufhellern und Farbstoffen.

Die WO 95/10563 lehrt eine matt-weiße Polymerfolie, die eine verbesserte Farbwirkung für Weiß sowie verringerte Gelbstichigkeit aufweist und sich besonders für die Herstellung von Kredit- und Magnetkarten eignet. Diese Polymerfolie besteht bevorzugt aus biaxial orientiertem Polyethylenterephthalat oder Polyethylennaphthalat, das zur Formstabilisierung einer kristallisationsfördernden Wärmebehandlung unterzogen wird. Als Füllstoff dient im wesentlichen Titandioxid vom Rutil- oder Anatas-Typ. Zusätzlich werden der Polymerfolie in geringen Mengen Glimmer und ggf. weitere funktionelle Additive, wie optische Aufheller zugesetzt.

Aufgabe der vorliegenden Erfindung war es, eine weiße, biaxial orientierte Thermoplastfolie einer Dicke von 10 bis 500 µm mit verbesserter Thermoformbarkeit zu schaffen, deren Gelbstichigkeit mit wenig Aufwand verringert werden kann.

Gegenstand der Erfindung ist daher eine weiße, biaxial orientierte Folie mit guter Schneidbarkeit mit einer Dicke im Bereich von 10 bis 500 µm, deren Hauptbestandteil mindestens ein kristallisierbarer Thermoplast ist, dadurch gekennzeichnet, daß der kristallisierbare Thermoplast ≥ 1,0 Gew.% Diethylenglykol und/oder ≥ 1,0 Gew.% Polyethylenglykol und/oder 3 Gew.-% bis 10 Gew.-% Isophthalsäure aufweist und daß die Folie mindestens ein Titandioxid vom Anatas-Typ als Weißpigment, mindestens einen optischen Aufheller und gegebenenfalls weitere Zusätze enthält.

Die Erfindung betrifft ferner ein Verfahren zur Herstellung dieser Folie und ihre Verwendung.

Alle derartigen Folien zeichnen sich neben einer guten Verstreckbarkeit, guten mechanischen sowie optischen Eigenschaften, vor allem einen hohen Weißgrad in Kombination mit einem niedrigen Gelbwert und mit einer wirtschaftlichen Thermoformbarkeit und insbesondere durch eine gute Schneidbarkeit aus.

Zu den guten optischen Eigenschaften zählen beispielsweise eine homogene, streifenfreie Einfärbung über die gesamte Folienbreite und -länge, eine niedrige Transparenz (≤ 40%) und ein akzeptabler Oberflächenglanz (≥ 10).

Ein niedriger Gelbwert (YID) bedeutet, daß der Gelbwert der Folien gemäß der Erfindung bei einer Foliendicke im Bereich von 10 bis 500 µm bei ≤ 40, vorzugsweise ≤ 35, insbesondere bei ≤ 30 liegt.

Ein hoher Weißgrad bedeutet, daß der Weißgrad der Folien bei ≥ 80%, vorzugsweise bei ≥ 83%, insbesondere bei ≥ 85% liegt.

Zu den guten mechanischen Eigenschaften zählt unter anderem ein hoher E-Modul (E_{MD} > 3300 N/mm²; E_{TD} > 4800 N/mm²) sowie gute Reißfestigkeitswerte (in MD > 130 N/mm²; in TD > 180 N/mm²) und gute Reißdehnungswerte in Längs- und Querrichtung (in MD > 120 %; in TD > 70 %).

Zu der guten Verstreckbarkeit zählt, daß sich die Folie bei ihrer Herstellung sowohl in Längs- als auch in Querrichtung hervorragend und ohne Abrisse orientieren läßt.

Thermoformbarkeit bedeutet, daß sich die Folie auf handelsüblichen Tiefziehmaschinen ohne unwirtschaftliches Vortrocknen zu komplexen und großflächigen Formkörpern tiefziehen bzw. thermoformen läßt.

Der Ausdruck "gute Schneidbarkeit" bedeutet, daß die Standzeit von Schneidwerkzeugen, d.h. von Messern, die zur Säumung der Folie eingesetzt werden, und von Stanzwerkzeugen hoch ist.

Darüber hinaus ist die Folie gemäß der Erfindung rezyklierbar, d.h. daß während der Folienherstellung im laufenden Betrieb anfallendes Verschnittmaterial wieder in den Produktionsprozeß zurückgeschleust werden kann, insbesondere ohne Verlust der Schneidbarkeit der Folie sowie der optischen und der mechanischen Eigenschaften, z.B. ohne den Gelbwert der Folie negativ zu beeinflussen.

Die Folie enthält als Hauptbestandteil mindestens einen kristallisierbaren Thermoplasten. Geeignete kristallisierbare bzw. teilkristalline Thermoplaste sind beispielsweise Polyethylenterephthalat (PET), Polyethylennaphthalat (PEN), Polybutylenterephthalat (PBT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei Polyethylenterephthalat und Polyethylennaphthalat bevorzugt sind.

Zur Herstellung der Thermoplaste können neben den Hauptmonomeren, z.B. Dimethylterephthalat (DMT), Ethylenglycol (EG), Propylenglycol (PG), 1,4-Butandiol, Terephthalsäure (TA), Benzoldicarbonsäure, 2,6-Naphtalindicarboxylat (NDC) und/oder 2,6-Naphtalindicarbonsäure (NDA), auch Isophthalsäure (IPA), *trans* und/oder *cis*-1,4-Cyclohexandimethanol (*c*-CHDM, *t*-CHDM oder *c*/*t*-CHDM) verwendet werden.

Gemäß der Erfindung versteht man unter kristallisierbaren Thermoplasten kristallisierbare Homopolymere, kristallisierbare Copolymere, kristallisierbare Compounds, kristallisierbares Recyklat und andere Variationen von kristallisierbaren Thermoplasten.

Bevorzugte Ausgangsmaterialien zur Herstellung der Folie sind kristallisierbare Thermoplaste, die einen Kristallitschmelzpunkt Tm, gemessen mit DSC (Differential Scanning Calorimetry) mit einer Aufheizgeschwindigkeit von 20 °C/min, von 180 °C bis über 365 °C, vorzugsweise von 180 °C bis 310 °C, einen Kristallisationstemperaturbereich Tc von 75 °C bis 280 °C, eine Glasübergangstemperatur Tg von 65 °C bis 130 °C , eine Dichte, gemessen nach DIN 53479, von 1,10 bis 1,45 und eine Kristallinität von 5 % bis 65 %, vorzugsweise 20 % bis 65 % aufweisen.

Für die Thermoformbarkeit ist es wichtig, daß der kristallisierbare Thermoplast ein Diethylenglykolgehalt von ≥ 1,0 Gew.%, vorzugsweise ≥ 1,2 Gew.%, insbesondere ≥ 1,3 Gew.% und/oder ein Polyethylenglykolgehalt von ≥ 1,0 Gew.%, vorzugsweise ≥ 1,2 Gew.%, insbesondere ≥ 1,3 Gew.% und/oder ein Isophthalsäuregehalt von 3 Gew.-% bis 10 Gew.-% aufweist.

Hauptbestandteil heißt, daß die Menge an Thermoplast bevorzugt im Bereich von 50 bis 98 Gew.-%, insbesondere von 75 bis 95 Gew.-% liegt. Die restliche Menge zu 100 % können neben dem anorganischen Pigment und dem optischen Aufheller weitere für biaxial orientierte Folien übliche Additive sein.

Die Folie gemäß der Erfindung kann sowohl einschichtig als auch mehrschichtig sein. Sie kann ebenfalls mit diversen Copolyestern oder Haftvermittlern beschichtet sein. Sie enthält im allgemeinen zwecks wirtschaftlicher Herstellung die für Folien üblichen Antiblock- und Gleitmittel.

In der mehrschichtigen Ausführungsform ist die Folie aus mindestens einer Kernschicht und mindestens einer Deckschicht aufgebaut, wobei insbesondere ein dreischichtiger A-B-A oder A-B-C Aufbau bevorzugt ist.

Für diese Ausführungsform ist es wesentlich, daß der Thermoplast der Kernschicht eine ähnliche Standardviskosität besitzt wie der Thermoplast der Deckschicht (en), die an die Kernschicht angrenzt (angrenzen).

In einer besonderen Ausführungsform können die Deckschichten aus einem Polyethylenterephthalat, aus einem bibenzolmodifizierten Polyethylenterephthalat-Polymeren, aus einem bibenzolmodifizierten und/oder unmodifizierten Polyethylennaphthalat - Polymeren oder aus einem bibenzolmodifizierten und/oder unmodifizierten Polyethylenterephthalat-Polyethylennaphthalat- Copolymeren oder-Compound bestehen.

In dieser Ausführungsform haben die Thermoplaste der Deckschichten ebenfalls ähnliche Standardviskositäten wie der Thermoplast der Kernschicht.

Die dem Thermoplasten zugesetzten Bestandteile der Folie können sowohl der Basisschicht als auch einer oder beiden Deckschichten zudosiert werden. Hierfür bietet sich der Extrusionsvorgang, vorzugsweise unter Einschluß des Masterbatch-Verfahrens an.

Wichtig bei der Masterbatch-Technologie ist, daß die Korngröße und das Schüttgewicht des Masterbatches ähnlich denen des Thermoplasten ist, so daß eine homogene Verteilung der Bestandteile und damit eine homogeneErzielung der gewünschten Eigenschaften der Folie, beispielsweise der guten Schneidbarkeit erfolgen kann.

Bei der Masterbatch-Technologie werden die Zusätze zunächst in einem festen Trägermaterial dispergiert. Als Trägermaterial kommen der Thermoplast selbst, z.B. das Polyethylenterephthalat oder auch andere Polymere, die mit dem Thermoplasten ausreichend verträglich sind, in Frage. Zur Folienherstellung wird das Masterbatch mit dem als Folienrohstoff vorgesehenen Thermoplast vermischt und zusammen in einem Extruder behandelt, wobei die Bestandteile miteinander verschmelzen und so in dem Thermoplasten gelöst werden.

Die Folie gemäß der Erfindung enthält mindestens ein Titandioxid vom Anatas-Typ als Pigment, wobei die Menge an Pigment vorzugsweise im Bereich von 2 bis 25 Gew.-%, insbesondere 3 bis 20 Gew.-% liegt, bezogen auf das Gewicht des kristallisierbaren Thermoplasten. Erfindungsgemäß wird das Titandioxid über die sogenannte Masterbatch-Technologie bei der Folienherstellung zudosiert.

Die Folie enthält ferner mindestens einen optischen Aufheller, wobei der optische Aufheller in Mengen von 10 bis 50.000 ppm,vorzugsweise von 20 bis 30.000 ppm, insbesondere von 50 bis 25.000 ppm, bezogen auf das Gewicht des kristallisierbaren Thermoplasten, eingesetzt wird. Auch der optische Aufheller wird über die sogenannte Masterbatch-Technologie zudosiert.

Geeignete optische Aufheller sind Benzoxazol Derivate, Triazine, Phenylcumarine und Bis-styrylbiphenyle; hiervon bevorzugt sind ®Tinopal (Ciba-Geigy, Basel, Schweiz), ®Hostalux KS (Clariant, Deutschland) sowie ®Eastobrite OB-1 (Eastman Chemicals, Deutschland).

Es ist mitunter zweckmäßig, neben dem optischen Aufheller auch noch im Thermoplasten lösliche blaue Farbstoffe zuzusetzen. Als geeigneter blauer Farbstoff hat sich beispielsweise ®Sudanblau 2 (BASF, Ludwigshafen) erwiesen.

Diese Farbstoffe werden in Mengen von 10 ppm bis 10.000 ppm, vorzugsweise 20 ppm bis 5.000 ppm, insbesondere 50 ppm bis 1.000 ppm, bezogen auf das Gewicht des kristallisierbaren Thermoplasten, eingesetzt.

Die erfindungsgemäß eingesetzten optischen Aufheller sind in der Lage, UV-Strahlen im Bereich von 360 bis 380 nm zu absorbieren und als längerwelliges, sichtbares blauviolettes Licht wieder abzugeben.

Die Titandioxidteilchen bestehen überwiegend aus Anatas, der im Vergleich zu Rutil eine geringere MOHS-Härte zeigt. In einer bevorzugten Ausführungsform bestehen die Titandioxidteilchen zu mindestens 95 Gew.-% aus Anatas. Sie können nach einem üblichen Verfahren, z.B. nach dem Chlorid- oder dem Sulfat-Prozeß, hergestellt werden. Ihre Menge in der Kernschicht beträgt zweckmäßigerweise 2 bis 25 Gew.-%, bezogen auf das Gewicht der Kernschicht. Die mittlere Teilchengröße ist relativ klein und liegt vorzugsweise im Bereich von 0,1 bis 0,5 µm, insbesondere von 0,1 bis 0,3 µm (Sedimentationsmethode).

Durch Titandioxid der beschriebenen Art entstehen innerhalb der Polymermatrix keine Vakuolen während der Folienherstellung.

Die Titandioxidteilchen können einen Überzug aus anorganischen Oxiden besitzen, wie er üblicherweise als Überzug für TiO₂-Weißpigment in Papieren oder Anstrichmitteln zur Verbesserung der Lichtechtheit eingesetzt wird.

TiO₂ ist bekanntlich fotoaktiv. Bei Einwirkung von UV-Strahlen bilden sich freie Radikale auf der Oberfläche der Partikel. Diese freien Radikale können in die Polymermatrix wandern, was zu Abbaureaktionen und Vergilbung führt. Um dies zu vermeiden, können die TiO₂-Partikel oxidisch beschichtet werden. Zu den besonders geeigneten Oxiden für die Beschichtung gehören die Oxide von Aluminium, Silicium, Zink oder Magnesium oder Mischungen aus zwei oder mehreren dieser Verbindungen. TiO₂-Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten. Die organischen Verbindungen müssen bei der Herstellung der Folie durch Extrusion der Polymerschmelze ausreichend thermostabil sein. Polare Gruppen sind beispielsweise -OH; -OR; -COOX; (X = R; H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z. B. Polydimethylsiloxan und Polymethylhydrogensiloxan.

Der Überzug für die Titandioxidteilchen besteht im allgemeinen aus 1,0 bis 12,0 g, vorzugsweise 2,0 bis 6,0 g anorganischen Oxiden und/oder 0,5 bis 3,0 g, vorzugsweise 0,7 bis 1,5 g organischen Verbindungen, bezogen auf 100,0 g Titandioxidteilchen. Der Überzug wird üblicherweise auf die Teilchen in wäßriger Suspension aufgebracht. Die anorganischen Oxide können aus wasserlöslichen Verbindungen, z. B. Alkali-, insbesondere Natriumnitrat, Natriumsilikat (Wasserglas) oder Kieselsäure in der wäßrigen Suspension ausgefällt werden.

Unter anorganischen Oxiden wie Al₂O₃ oder SiO₂ sind auch die Hydroxide oder deren verschiedene Entwässerungsstufen wie z. B. Oxidhydrat zu verstehen, ohne daß man deren genaue Zusammensetzung und Struktur kennt. Auf das TiO₂-Pigment werden nach dem Glühen und Mahlen in wäßriger Suspension die Oxidhydrate z. B. des Aluminiums und/oder Silicium gefällt, die Pigmente werden dann gewaschen und getrocknet. Diese Ausfällung kann somit direkt in einer Suspension geschehen, wie sie im Herstellprozeß nach der Glühung und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich. Für das Aluminium wird beispielsweise Aluminiumsulfat in wäßriger Lösung (pH ≤ 4) eingesetzt und durch Zugabe von wäßriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten TiO₂-Suspension im stark alkalischen Bereich (pH ≥ 8) liegen. Die Ausfällung erfolgt dann durch Zugabe von Mineralsäure wie Schwefelsäure im pH-Bereich 5 bis 8. Nach der Ausfällung der Metalloxide wird die Suspension noch 15 min bis etwa 2 Stunden gerührt, wobei die ausgefällten Schichten eine Alterung erfahren.

Das beschichtete Produkt wird von der wäßrigen Dispersion abgetrennt und nach dem Waschen bei erhöhter Temperatur, vorzugsweise bei 70 bis 100 °C, getrocknet.

In einer bevorzugten Ausführungsform enthält die Folie gemäß der Erfindung Titandioxid vom Anatas-Typ der Firma Sachtleben (®Hombitan LW-S-U).

Durch die synergistische Wirkung des Titandioxid vom Anatas-Typ und des optischen Aufhellers weist die Folie einen Weißgrad von ≥ 80%, vorzugsweise ≥ 83%, insbesondere ≥ 85% in Kombination mit einem Gelbwert von ≤ 45, vorzugsweise ≤ 40, insbesondere ≤ 35 bei einer Dicke im Bereich von 10 µm bis 500 µm auf. Die Folie sieht visuell extrem weiß auf, sie hat keinen Gelbstich.

Gemäß der Erfindung kann die Folie auf mindestens einer ihrer Oberflächen beschichtet sein, so daß die Beschichtung auf der fertigen Folie eine Stärke von 5 bis 100 nm, bevorzugt 20 bis 70 nm, insbesondere 30 bis 50 nm aufweist. Die Beschichtung wird bevorzugt In-line aufgebracht, d.h. während des Folienherstellprozesses, zweckmäßigerweise nach der Extrusion. Bevorzugt ist auch die Aufbringung mittels des "Reverse gravure-roll coating"-Verfahrens, bei dem sich die Beschichtungen äußerst homogen in den genannten Schichtdicken auftragen lassen. Die Beschichtungen werden als verdünnte Lösung, Emulsion oder Dispersion vorzugsweise in wäßriger Form auf mindestens eine Folienoberfläche aufgebracht und anschließend das Lösungsmittel verflüchtigt. Werden die Beschichtungen In-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Sie verleihen der Folienoberfläche eine zusätzliche Funktion, beispielsweise wird die Folie dadurch siegelfähig, bedruckbar, metallisierbar, sterilisierbar, antistatisch oder verbessern z.B. die Aromabarriere oder ermöglichen die Haftung zu Materialien, die ansonsten nicht auf der Folienoberfläche haften würden (z.B. fotografische Emulsionen). Beispiele für Stoffe/Zusammensetzungen, die zusätzliche Funktionalität verleihen sind:

Acrylate (WO 94/13476), Ethylvinylalkohole, Polyvinylidendichlorid, Wasserglas (Na₂SiO₄), hydrophilische Polyester (5-Na-sulfoisophthalsäurehaltige PET/IPA Polyester (EP-A-0 144 878, US-A-4,252,885 oder EP-A-0 296 620), Vinylacetate wie (WO 94/13481), Polyvinylacetate, Polyurethane, Alkali- oder Erdalkalisalze von C₁₀-C₁₈-Fettsäuren, Butadiencopolymere mit Acrylnitril oder Methylmethacrylat, Methacrylsäure, Acrylsäure oder deren Ester. Die Stoffe/Zusammensetzungen, die die zusätzliche Funktionalität verleihen, können die üblichen Additive z.B. Antiblockmittel, pH-Stabilisatoren in Mengen im Bereich von 0,05 bis 5,0 Gew.-%, vorzugsweise von 0,1 bis 3,0 Gew.-% enthalten.

Die Folie kann auch mindestens einseitig coronabehandelt und/oder mit einem Copolyester oder mit einem Haftvermittler beschichtet und/oder mit EthylenVinylalkohol-Copolymer, Ethyl-Vinylalkohol, Polyvinylalkohol oder Polyvinylidendichlorid bedampft sein.

Der Thermoformprozeß umfaßt in der Regel die Schritte Vortrocknen, Aufheizen, Formen, Abkühlen, Entformen, Tempern. Beim Thermoformprozeß wurde festgestellt, daß sich die Folien gemäß der Erfindung ohne vorheriges Vortrocknen überraschenderweise tiefziehen lassen. Dieser Vorteil im Vergleich zu tiefziehfähigen Polycarbonat- oder Polymethylmethacrylat-Folien, bei denen Vortrocknungszeiten von 10-15 Stunden, je nach Dicke bei Temperaturen von 100 °C bis 120 °C erforderlich sind, reduziert drastisch die Kosten des Umformprozesses. Daneben war sehr überraschend, daß die Detailwiedergabe des Formkörpers hervorragend ist. Die Folie kann auch beispielsweise als Rollenware dem Thermoformprozess zugeführt werden.

Es war mehr als überraschend, daß sich die Folien gemäß der Erfindung durch ein im Vergleich zum Standardthermoplast höheren Diethylenglykolgehalt und/oder Polyethylenglykolgehalt und/oder IPA-Gehalt wirtschaftlich auf handelsüblichen Tiefziehanlagen thermoformen lassen und eine hervorragende Detailwiedergabe liefern.

Für das Thermoformen haben sich folgende Verfahrensparameter im allgemeinen als geeignet erwiesen :

| | |
|---|---|
| Verfahrensschritt | Folie gemäß der Erfindung |
| Vortrocknen | nicht erforderlich |
| Temperatur der Form | 100 bis 140 °C |
| Aufheizzeit pro 10 µm Foliendicke | < 5 sec pro 10 µm Foliendicke |
| Folientemperatur beim Verformen | 100 bis 160 °C |
| Möglicher Verstreckfaktor | 1,0 bis 2,5 |
| Detailwiedergabe | hervorragend |
| Schrumpf (Schwindung) | < 1,5 % |

Die Folie gemäß der Erfindung zeichnet sich daneben insbesondere durch eine hervorragende Schneidbarkeit aus, d.h. der Materialabtrag an der Schnittkante der Messer (maximale Tiefe des abgetragenen Kraters an der Schnittkante), die zur Säumung der Folienränder eingesetzt werden, liegt überraschenderweise <100 µm, vorzugsweise <80 µm und insbesondere <75 µm pro m² geschnittener Folienfläche (Folienfläche = Folienlauflänge x Foliendicke). Dadurch wird eine hohe Standzeit der Schneidwerkzeuge erreicht. Beispielsweise haben sich hierfür die Schneidklingen der Firma Herkenrath, Typ Stanley Trapezklingen als geeignet erwiesen.

Der Oberflächenglanz der Folien gemäß der Erfindung, gemessen nach DIN 67530 (Meßwinkel 20°), ist ≥ 15, vorzugsweise ≥ 20 und die Lichttransmission L*, gemessen nach ASTM D 1003, beträgt ≤ 85 %, vorzugsweise ≤ 80 %, was für die erzielte weiße Einfärbung überraschend gut ist.

Wo eine sehr gute Siegelfähigkeit gefordert wird und wo diese Eigenschaft nicht über eine On-line Beschichtung erreicht werden kann, ist die Folie gemäß der Erfindung zumindest dreischichtig aufgebaut und umfaßt dann in einer besonderen Ausführungsform als Schichten die Basisschicht B, die siegelfähige Deckschicht A und die Deckschicht C, die siegelfähig oder nicht siegelfähig sein kann. In der Ausführungsform, in der die Deckschicht C siegelfähig ist, sind die Deckschichten A und C identisch.

### Siegelfähige Deckschicht A

Die durch Koextrusion auf die Basisschicht B aufgebrachte siegelfähige Deckschicht A ist auf Basis von Polyestercopolymeren aufgebaut und besteht im wesentlichen aus Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Etylenterephthalat- und Ethylenisophthalat-Einheiten und aus Ethylenglykol-Einheiten aufgebaut sind. Der Anteil an Ethylenterephthalat beträgt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt und insbesondere Copolyester, bei denen der Anteil an Ethylenterephthalat 60 bis 85 Mol-% und der entsprechende Anteil an Ethylenisophthalat 40 bis 15 Mol-% beträgt.

### Nicht siegelfähige Deckschicht C

Für die andere, nicht siegelfähige Deckschicht C oder für eventuell vorhandene Zwischenschichten können prinzipiell die gleichen Polymere verwendetwerden, wie zuvor für die Basisschicht beschrieben wurde.

Die gewünschten Siegel- und die gewünschten Verarbeitungseigenschaften der Folie gemäß der Erfindung werden aus der Kombination der Eigenschaften des verwendeten Copolyesters für die siegelfähige Deckschicht und den Topographien der siegelfähigen Deckschicht A und der siegelfähigen oder nicht siegelfähigen Deckschicht C erhalten.

Die Siegelanspringtemperatur von 130 °C und die Siegelnahtfestigkeit von mindestens 0,6 N/15mm wird erreicht, wenn für die siegelfähige Deckschicht A die oben näher beschriebenen Copolymere verwendet werden. Die besten Siegeleigenschaften der Folie erhält man, wenn dem Copolymeren keine weiteren Additive, insbesondere keine anorganische oder organische Filler zugegeben werden. Für diesen Fall erhält man bei vorgegebenem Copolyester die niedrigste Siegelanspringtemperatur und die höchsten Siegelnahtfestigkeiten. Allerdings ist in diesem Fall die Handhabung der Folie schlecht, da die Oberfläche der siegelfähigen Deckschicht A stark zum Verblocken neigt. Die Folie läßt sich kaum wickeln und ist für eine Weiterverarbeitung auf schnellaufenden Verpackungsmaschinen nicht geeignet. Zur Verbesserung der Handhabung der Folie und der Verarbeitbarkeit ist es notwendig, die siegelfähige Deckschicht A zu modifizieren. Dies geschieht am besten mit Hilfe von geeigneten Antiblockmitteln einer ausgewählten Größe, die in einer bestimmten Konzentration der Siegelschicht zugegeben werden und zwar derart, daß einerseits das Verblocken minimiert und andererseits die Siegeleigenschaften nur unwesentlich verschlechtert werden.

Zur Einstellung weiterer gewünschter Eigenschaften kann die Folie auch corona- bzw. flammbehandelt sein. Die Behandlungsintensität ist so gewählt, daß die Oberflächenspannung der Folie im allgemeinen über 45 mN/m liegt.

Die Herstellung der Folie gemäß der Erfindung kann beispielsweise nach einem Extrusionsverfahren in einer Extrusionsstraße erfolgen.

Zu der wirtschaftlichen Herstellung zählt, daß die Rohstoffe bzw. die Rohstoffkomponenten, die zur Herstellung der Folie benötigt werden, mit handelsüblichen Industrietrocknern, wie Vakuum- (d.h. unter vermindertem Druck), Wirbelschicht-, Fließbett- oder Festbett-Trockner (Schachttrockner), getrocknet werden können. Wesentlich ist, daß die erfindungsgemäß eingesetzten Zusatzstoffe nicht ausgasen oder Wandbeläge in den Trocknern bilden, daß die Rohstoffe nicht verkleben und nicht thermisch abgebautwerden. Die genannten Trockner arbeiten im allgemeinen bei normalen Druck mit Temperaturen zwischen 100 und 170 °C.

Bei einem Vakuumtrockner, der die schonendsten Trockenbedingungen erlaubt, durchläuft der Rohstoff einen Temperaturbereich von ca. 30 °C bis 130 °C bei einem vermindertem Druck von 50 mbar. Danach ist ein sogenanntes Nachtrocknen in einem Hopper bei Temperaturen von 100 bis 130 °C und einer Verweilzeit von 3 bis 6 Stunden erforderlich.

Mitunter ist es wünschenswert, daß das Masterbatch vorkristallisiert bzw. vorgetrocknet wird. Diese Vortrocknung beinhaltet ein gradielles Erhitzen des Masterbatches unter reduziertem Druck (20 bis 80 mbar, vorzugsweise 30 bis 60 mbar, insbesondere 40 bis 50 mbar) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160°C, vorzugsweise 20°C bis 150°C, insbesondere 30°C bis 130°C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90° bis 180 °C, vorzugsweise 100°C bis 170°C, insbesondere 110°C bis 160°C für 2 bis 8 Stunden, vorzugsweise 3 bis 7 Stunden, insbesondere 4 bis 6 Stunden nachgetrocknet.

Bei der Herstellung einer Folie gemäß der Erfindung wurde festgestellt, daß sich, gegebenenfalls mittels Masterbatch-Technologie, einer geeigneten Vortrocknung bzw. Vorkristallisation des jeweils eingesetzten Masterbatches, die Folie ohne Verklebung im Trockner herstellen läßt. Des weiteren wurden keine Ausgasungen und Ablagerungen im Produktionsprozeß gefunden.

Bei der Herstellung der Folie wurde auch festgestellt, daß sie sich hervorragend in Längs- und in Querrichtung ohne Abrisse orientieren läßt.

Die Folien können nach bekannten Verfahren aus einem Thermoplastrohstoff, dem Titandioxid vom Anatas-Typ, dem optischen Aufheller, gegebenenfalls dem blauen Farbstoff und/oder gegebenfalls weiteren üblichen Additiven in üblicher Menge von 0,1 bis maximal 10,0 Gew.-% sowohl als Monofolien als auch als mehrschichtige, gegebenenfalls coextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

In der mehrschichtigen Ausführungsform sind das Titandioxid sowie der optische Aufheller und gegebenenfalls der blaue Farbstoff vorzugsweise in der Kernschicht enthalten. Bei Bedarf können auch die Deckschichten ausgerüstet sein.

Anders als in der einschichtigen Ausführungsform bezieht sich hier die Menge an Additiven auf das Gewicht der Thermoplasten in der mit dem/den Additiven ausgerüsteten Schicht.

Bei dem bevorzugten Extrusionsverfahren zur Herstellung der Folie werden die Polymere bzw. Rohstoffgemische einem Extruder bzw. bei mehrschichtigen Folien mehreren Extrudern zugeführt. Etwa vorhandene Fremdkörper oder Verunreinigungen lassen sich aus der Polymerschmelze vor der Extrusion abfiltrieren. Die Schmelze(n) werden dann in einer Monodüse bzw. im mehrschichtigen Fall in einer Mehrschichtdüse zu flachen Schmelzefilmen ausgeformt und im mehrschichtigen Fall übereinander geschichtet. Anschließend wird der Monofilm oder der Mehrschichtfilm mit Hilfe einer Kühlwalze abgeschreckt und als weitgehend amorphe, d.h. unorientierte Folie verfestigt. Diese Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen im allgemeinen bei T_{g} +10 °C bis T_{g} + 60 °C (T_{g} = Glastemperatur), das Streckverhältnis der Längsstreckung liegt üblicherweise bei 2 bis 6, vorzugsweise bei 2,5 bis 4,5, das der Querstreckung bei 2 bis 5, vorzugsweise bei 3 bis 4,5, und das der gegebenenfalls, durchgeführten zweiten Längsstreckung bei 1,1 bis 3. Die erste Längsstreckung kann gegebenfalls, gleichzeitig mit der Querstreckung (Simultanstreckung) durchgeführt werden. Anschließend folgt die Thermofixierung der Folie bei Ofentemperaturen von 200 bis 280 °C, vorzugsweise bei 220 bis 270 °C. Anschließend wird die Folie abgekühlt und aufgewickelt.

Bei der Herstellung der Folie gemäß der Erfindung wurde festgestellt, daß sich die Folie prozeßsicher herstellen läßt. Auch wurden keinerlei Ausgasungen im Produktionsprozeß gefunden, was erfindungswesentlich ist.

Durch die überraschende Kombination ausgezeichneter Eigenschaften eignet sich die Folie gemäß der Erfindung hervorragend für eine Vielzahl verschiedener Anwendungen, beispielsweise für Innenraumverkleidungen, für Messebau und Messeartikel, für Displays, für Schilder, für Etiketten, im Laden- und Regalbau, als kurzlebige Werbeschilder, Labels oder anderer Werbeartikel, als Kaschiermedium und für Lebensmittelanwendungen, für medizinische Anwendungen, im Bausektor, als Möbelfolie, als Verpackungsfolie oder im Tiefkühlbereich.

In den nachfolgenden Ausführungsbeispielen erfolgt die Messung der einzelnen Eigenschaften gemäß den folgenden Normen bzw. Verfahren.

### DEG-Gehalt/PEG-Gehalt/IPA-Gehalt

Der DEG-/PEG-/IPA-Gehalt wird gaschromatografisch nach Verseifung in methanolischer KOH und Neutralisation mit wäßriger HCI bestimmt.

### Oberflächenglanz

Der Oberflächenglanz wird bei einem Meßwinkel von 20° nach DIN 67530 gemessen.

### Lichttransmission/Transparenz

Unter der Lichttransmission /Transparenz ist das Verhältnis des insgesamt durchgelassenen Lichtes zur einfallenden Lichtmenge zu verstehen. Sie wird mit dem Meßgerät "Hazegard plus" nach ASTM D 1003 gemessen.

### Oberflächendefekte, homogene Einfärbung

Die Oberflächendefekte und die homogene Einfärbung werden visuell bestimmt.

### Mechanische Eigenschaften

Der E-Modul, die Reißfestigkeit und die Reißdehnung werden in Längs- und Querrichtung nach ISO 527-1-2 gemessen.

### SV (DCE), IV (DCE)

Die Standardviskosität SV (DCE) wird in Anlehnung an DIN 53726 in Dichloressigsäure gemessen. Die intrinsische Viskosität (IV) berechnet sich wie folgt aus der Standardviskosität (SV): IV (DCE) = 6,67 • 10⁻⁴ SV (DCE) + 0,118.

### Gelbwert

Der Gelbwert (YID) ist die Abweichung von der Farblosigkeit in Richtung "Gelb" und wird gemäß DIN 6167 gemessen.

### Weißgrad

Der Weißgrad wird nach Berger bestimmt, wobei im allgemeinen mehr als 20 Folienlagen aufeinander gelegt werden. Die Bestimmung des Weißgrades erfolgt mit Hilfe des elektrischen Remissionsphotometers ®ELREPHO der Firma Zeiss, Oberkochem (DE), Normlichtart C, 2° Normalbeobachter. Der Weißgrad wird als WG = RY + 3RZ - 3RX definiert. WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

### Materialabtrag an der Messerschnittkante

Der Materialabtrag an der Messerschnittkante wird lichtmikroskopisch bestimmt und die Tiefe der Schnittgrates abgelesen. Er wird auf die Standzeit des Messers und somit auf die geschnittene Folienfläche umgerechnet. Als Schneidklingen wurden Klingen der Firma Herkenrath, Typ Stanley Trapezklingen, verwendet.

### Bestimmung der Siegelanspringtemperatur (Mindestsiegeltemperatur)

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 Sekunden gesiegelt wird. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/15 mm erreicht wird.

### Siegelnahtfestigkeit

Zur Bestimmung der Siegelnahtfestigkeit werden zwei 15 mm breite Folienstreifen übereinandergelegt und bei 130°C, einer Siegelzeit von 0,5 Sekunden und einem Siegeldruck von 2 bar (Gerät: Brugger Typ NDS, einseitig beheizte Siegelbacke) versiegelt. Die Siegelnahtfestigkeit wird nach der T-Peel-Methode bestimmt.

### Beispiele

Bei nachstehenden Beispielen und Vergleichsbeispielen handelt es sich jeweils um ein- oder mehrschichtige,weiße, biaxial orientierte Folien unterschiedlicher Dicke, die auf der beschriebenen Extrusionsstraße hergestellt werden.

Das Polyethylenterephthalat (Klarrohstoff), aus dem die Folien hergestellt wurden und das Polyethylenterephthalat, das zur Herstellung der Masterbatche verwendet wurde, hatte eine Standardviskosität SV (DCE) von 810, was einer intrinsischen Viskosität von 0,658 dl/g entspricht.

### Beispiel 1

Es wurde eine 75 µm dicke, weiße Folie hergestellt, die als Hauptbestandteil Polyethylenterephthalat (Typ RT49, KoSa, Deutschland), 7% Titandioxid vom Anatas-Typ (Hombitan LW-S-U, Fa. Sachtleben, Deutschland), 196 ppm optischen Aufheller (Hostalux KS, Fa. Clariant, Deutschland) sowie 30 ppm blauen Farbstoff Sudanblau 2 (Fa. BASF, Deutschland) enthielt.

Die Additive Titandioxid, optischer Aufheller und blauer Farbstoff wurden als Masterbatche zugegeben.

Das Masterbatch (1) setzt sich zusammen aus 50% Titandioxid, 0,14% optischem Aufheller sowie 49,86% Klarrohstoff. Das Masterbatch (2) enthält neben Klarrohstoff 1500 ppm blauen Farbstoff.

Vor der Extrusion wurden 14,0 Gew.-% Masterbatch (1), 2,0 Gew-.% Masterbatch (2) sowie 84,0 Gew.-% Klarrohstoff bei einer Temperatur von 150 °C getrocknet und anschließend im Extruder aufgeschmolzen.

### Beispiel 2

Es wurde analog Beispiel 1 eine 75µm dicke Folie hergestellt. Sie enthielt 14 Gew.-% Masterbatch (1) und 86 Gew.-% Klarrohstoff, aber keinen blauen Farbstoff.

### Beispiel 3

Es wurde eine 23 µm dicke, koextrudierte weiße A-B-A-Folie hergestellt, wobei A für die Deckschichten und B für die Kernschicht steht. Die Rezeptur der 20 um dicken Kernschicht entsprach der Rezeptur des Beispiels 2. Die 1,5 um dicken Deckschichten enthielten 93 Gew.-% Klarrohstoff sowie 7 Gew.-% eines Masterbatches, das neben Klarrohstoff 10.000 ppm Siliciumdioxid (®Sylobloc 44 H, Fa. Grace, Deutschland) enthielt. Diese Folie zeichnete sich durch einen hohen Oberflächenglanz aus.

### Vergleichsbeispiel V1

Es wurde eine 75 µm dicke Monofolie hergestellt, die dem Beispiel 2 entsprach. Die Folie enthielt keinen optischen Aufheller.

### Vergleichsbeispiel V2

Eine 75 µm dicke weiße Monofolie wurde gemäß Beispiel 2 hergestellt. Sie enthielt aber neben Klarrohstoff 7,0 Gew.-% Titandioxid vom Rutil-Typ (®Tronox RFK2, Fa. Kerr McGee, Deutschland). Die Folie enthielt außerdem keinen optischen Aufheller. Dieses Vergleichsbeispiel ist sowohl in der Einfärbung wie auch in dem Materialabtrag zurückstehend gegenüber den Beispielen gemäß der Erfindung.

Die Eigenschaften der hergestellten Folien sind aus der nachstehenden Tabelle zu entnehmen:

| Eigenschaften | | Beispiele | | | | |
|---|---|---|---|---|---|---|
| | | 1 | 2 | 3 | V1 | V2 |
| Dicke [µm] | | 75 | 75 | 23 | 75 | 75 |
| Oberflächenglanz (Meßwinkel 20°) | 1. Seite | 50 | 55 | 160 | 45 | 50 |
| | 2. Seite | 50 | 50 | 160 | 50 | 50 |
| Lichttransmission/ Transparenz [%] | | 33 | 31 | 43 | 33 | 29 |
| Weißgrad (nach Berger) [%] | | 89 | 90 | 84 | 82 | 85 |
| Gelbzahl (YID) | | 21 | 23 | 13 | 41 | 31 |
| E-Modul längs [N/mm²] | | 4450 | 4300 | 4400 | 4300 | 4400 |
| E-Modul quer [N/mm²] | | 5700 | 5450 | 5400 | 5650 | 5600 |
| Reißfestigkeit längs [N/mm²] | | 210 | 200 | 200 | 255 | 200 |
| Reißfestigkeit quer [N/mm²] | | 260 | 270 | 265 | 265 | 260 |
| Reißdehnung längs [%] | | 135 | 140 | 125 | 140 | 135 |
| Reißdehnung quer [%] | | 95 | 100 | 100 | 100 | 90 |
| Einfärbung | | strahlend weiß | strahlend weiß | strahlend weiß | weiß | weiß |
| Materialabtrag an der Messerschnittkante [µm/m²] | | 67 | 68 | 70 | 70 | >200 |

## Patentansprüche

1. Weiße, biaxial orientierte Folie mit guter Schneidbarkeit mit einer Dicke im Bereich von 10 bis 500 µm, deren Hauptbestandteil mindestens ein kristallisierbarer Thermoplast ist, **dadurch gekennzeichnet, daß** der kristallisierbare Thermoplast ≥1,0 Gew.% Diethylenglykol und/oder ≥1,0 Gew.% Polyethylenglykol und/oder3 Gew.-% bis 10 Gew.-% Isophthalsäure aufweist und daß die Folie mindestens ein Titandioxid vom Anatas-Typ als Weißpigment, mindestens einen optischen Aufheller und gegebenenfalls weitere Zusätze enthält.

2. Folie nach Anspruch 1, **dadurch gekennzeichnet, daß** der kristallisierbare Thermoplast ≥1,2 Gew.%, insbesondere ≥1,3 Gew.%, Diethylenglykol und/oder ≥1,2 Gew.%, insbesondere ≥1,3 Gew.%, Polyethylenglykol und/oder 3 bis 10 Gew.-% Isophthalsäure aufweist.

3. Folie nach Anspruch 1, **dadurch gekennzeichnet, daß** der kristallisierte Thermoplast ein Polyethylenterephthalat, Polybutylenterephthalat, Polyethylennaphthalat, bibenzolmodifiziertes Polyethylenterephthalat oder Mischungen daraus, vorzugsweise Polyethylenterephthalat oder Polyethylennaphthalat ist.

4. Folie nach Anspruch 1, **dadurch gekennzeichnet, daß** das Weißpigment in einer Konzentration im Bereich von 2,0 bis 25,0 Gew.-%, vorzugsweise von 2,0 bis 23,0 Gew.-%, insbesondere 3,0 bis 20,0 Gew.-%, bezogen auf das Gewicht des Thermoplasten, enthalten ist.

5. Folie nach Anspruch 1, **dadurch gekennzeichnet, daß** als optischer Aufheller mindestens ein Benzoxazol-, Triazin-, Phenylcumarin- und Bis-styrylbiphenyl-Derivat in Mengen von 10 bis 50.000 ppm, vorzugsweise von 20 bis 30.000 ppm, insbesondere von 50 bis 25.000 ppm, bezogen auf das Gewicht des kristallisierbaren Thermoplasten, enthalten ist und als weiterer Zusatz ein löslicher Farbstoff in einer Konzentration im Bereich von 10 bis 10.000 ppm, vorzugsweise 20 bis 5.000 ppm, insbesondere 50 bis 1.000 ppm vorliegt.

6. Folie nach Anspruch 5, **dadurch gekennzeichnet, daß** der lösliche Farbstoff blau ist.

7. Folie nach einem oder mehreren der Ansprüche 1 bis 6, **dadurch gekennzeichnet, daß** der Materialabtrag an der Schnittkante der Messer <100 µm, vorzugsweise <80 µm und insbesondere <75 µm pro m² geschnittener Folienfläche beträgt.

8. Folie nach Anspruch 1, **dadurch gekennzeichnet, daß** die Titandioxidteilchen einen Überzug aus anorganischen Oxiden besitzen.

9. Folie nach einem oder mehreren der Ansprüche 1 bis 8, **dadurch gekennzeichnet, daß** ein Regenerat enthalten ist.

10. Folie nach einem oder mehreren der Ansprüche 1 bis 9, **dadurch gekennzeichnet, daß** sie einschichtig ist.

11. Verfahren zur Herstellung einer weißen, biaxial orientierte Folie mit guter Schneidbarkeit mit einer Dicke im Bereich von 10 bis 500 µm, deren Hauptbestandteil mindestens ein kristallisierbarer Thermoplast ist, **dadurch gekennzeichnet, daß** der ≥1,0 Ges.% Diethylenglykol und/oder ≥1,0 Gew.% Polyethylenglykol und/oder 3 Gew.-% bis 10 Gew.-% Isophthalsäure enthaltende kristallisierbare Thermoplast mit mindestens einem Titandioxid vom Anatas-Typ als Weißpigment und mindestens einem optischen Aufheller nach einem Extrusionsverfahren zu einem flachen Schmelzefilm ausgeformt, mit Hilfe einer Kühlwalze zu einer weitgehend amorphen Vorfolie abgeschreckt und verfestigt wird, diese Folie anschließend erneut erhitzt und mindestens einmal in Längs- und Querrichtung gestreckt, dann bei Temperaturen von 200 bis 280°C thermofixiert und schließlich abgekühlt und aufgewickelt wird.

12. Verfahren nach Anspruch 11, **dadurch gekennzeichnet, daß** die Folie mit mindestens einer Siegelschicht ausgerüstet und/oder auf einer oder beiden Oberflächen beschichtet und/oder auf einer oder beiden Seiten coronabehandelt und neben dem optischen Aufheller mit einem löslichen Farbstoff versehen wird.

13. Verfahren nach Anspruch 11 oder 12, **dadurch gekennzeichnet, daß** das Titandioxid vom Anatas-Typ, der optische Aufheller und gegebenenfalls die weiteren Substanzen bei der Folienherstellung in den Extruder zudosiert werden, wobei die Zugabe überdie Masterbatch - Technologie bevorzugt ist.

14. Verwendung von einer Folie nach einem oder mehreren der Ansprüche 1 bis 10 für Innenraumverkleidungen, für Messebau und Messeartikel, für Displays, für Schilder, für Etiketten, im Laden- und Regalbau, als kurzlebige Werbeschilder, Labels oder anderer Werbeartikel, als Kaschiermedium und für Lebensmittelanwendungen, für medizinische Anwendungen, im Bausektor, als Möbelfolie, als Verpackungsfolie oder im Tiefkühlbereich.

## Claims

1. A white, biaxially oriented film with good cuttability with a thickness in the range from 10 to 500 µm, whose main constituent is at least one crystallizable thermoplastic, wherein the crystallizable thermoplastic contains ≥ 1.0 % by weight of diethylene glycol, and/or ≥ 1.0 % by weight of polyethylene glycol, and/or from 3 % by weight to 10 % by weight of isophthalic acid, and wherein the film comprises at least one anatase-type titanium dioxide as white pigment, at least one optical brightener, and, where appropriate, other additives.

2. The film as claimed in claim 1, wherein the crystallizable thermoplastic contains ≥ 1.2 % by weight, in particular ≥ 1.3 % by weight, of diethylene glycol, and/or ≥ 1.2% by weight, in particular ≥ 1.3 % by weight, of polyethylene glycol, and/or from 3 to 10 % by weight of isophthalic acid.

3. The film as claimed in claim 1, wherein the crystallizable thermoplastic is a polyethylene terephthalate, polybutylene terephthalate, polyethylene naphthalate, bibenzyol-modified polyethylene terephthalate, or a mixture of these, preferably polyethylene terephthalate or polyethylene naphthalate.

4. The film as claimed in claim 1, wherein the concentration of white pigment present is in the range from 2.0 to 25.0 % by weight, preferably from 2.0 to 23.0 % by weight, in particular from 3.0 to 20.0 % by weight, based on the weight of the thermoplastic.

5. The film as claimed in claim 1, wherein the optical brightener present comprises at least one benzoxazole derivative, triazine derivative, phenylcoumarin derivative, or bisstyrylbiphenyl derivative, in amounts of from 10 to 50 000 ppm, preferably from 20 to 30 000 ppm, in particular from 50 to 25 000 ppm, based on the weight of the crystallizable thermoplastic, and a soluble dye is present as further additive in a concentration in the range from 10 to 10 000 ppm, preferably from 20 to 5 000 ppm, in particular from 50 to 1 000 ppm.

6. The film as claimed in claim 5, wherein the soluble dye is a blue dye.

7. The film as claimed in one or more of claims 1 to 6, wherein the material abraded by the cutting edge of the knife amounts to <100 µm, preferably <80 µm, and in particular <75 µm per m² of cut film surface.

8. The film as claimed in claim 1, wherein the titanium oxide particles have a coating composed of inorganic oxides.

9. The film as claimed in one or more of claims 1 to 8, which comprises regrind.

10. The film as claimed in one or more of claims 1 to 9, which is a single-layer film.

11. A process for producing a white, biaxially oriented film with good cuttability with a thickness in the range from 10 to 500 µm whose main constituent is at least one crystallizable thermoplastic, which comprises extruding the crystallizable thermoplastic containing ≥ 1.0 % by weight of diethylene glycol, and/or containing ≥ 1.0 % by weight of polyethylene glycol, and/or containing from 3 % by weight to 10 % by weight of isophthalic acid, with at least one anatase-type titanium dioxide as white pigment and with at least one optical brightener to give a flat melt film, quenching and solidifying the same with the aid of a chill roll to give a substantially amorphous prefilm, then reheating this film and stretching it at least once longitudinally and transversely, then heat-setting the film at a temperature of from 200 to 280 °C, and finally cooling and winding up the film.

12. The process as claimed in claim 11, wherein the film is provided with at least one sealing layer, and/or is coated on one or both surfaces, and/or is corona-treated on one or both sides, and is provided with a soluble dye alongside the optical brightener.

13. The process as claimed in claim 11 or 12, wherein the film is produced by metering the anatase-type titanium dioxide, the optical brightener, and, where appropriate, the other substances into the extruder, the addition preferably taking place by way of masterbatch technology.

14. The use of the film as claimed in one or more of claims 1 to 10 for interior coverings, for constructing exhibiton stands, for exhibition requisites, as displays, for placards, for labels, in the fitting out of shops or of stores, as shortlived advertising placards, labels, or other promotional items, as a laminating medium, or for food or drink applications, for medical applications, in the construction sector, as a furniture film, as a packaging film, or in the deep-freeze sector.

## Revendications

1. Feuille blanche à orientation biaxiale avec une bonne aptitude à la coupe, d'une épaisseur comprise dans le domaine de 10 à 500 µm, dont le composant principal est au moins un thermoplastique cristallisable, **caractérisée en ce que** le thermoplastique cristallisable comporte ≥1,0 % en poids de diéthylèneglycol et/ou ≥ 1,0 % en poids de polyéthylèneglycol et/ou 3 % en poids à 10 % en poids d'acide isophtalique et **en ce que** la feuille contient au moins un oxyde de titane de type anatase comme pigment blanc, au moins un azurant optique et, le cas échéant, d'autres additifs.

2. Feuille selon la revendication 1, **caractérisée en ce que** le thermoplastique cristallisable comporte ≥1,2 % en poids, en particulier ≥1,3 % en poids de diéthylèneglycol et/ou ≥ 1,2 % en poids en particulier ≥1,3 % en poids de polyéthylèneglycol et/ou 3 à 10 % en poids d'acide isophtalique.

3. Feuille selon la revendication 1, **caractérisée en ce que** le thermoplastique cristallisé est un poly(téréphtalate d'éthylène), un poly(téréphtalate de butylène), un poly(naphtalate d'éthylène), un poly(téréphtalate d'éthylène) modifié par dibenzène ou des mélanges de ceux-ci, de préférence un poly(téréphtalate d'éthylène), ou un poly(naphtalate d'éthylène).

4. Feuille selon la revendication 1, **caractérisée en ce que** le pigment blanc est contenu en une concentration comprise dans le domaine de 2,0 à 25,0 % en poids, de préférence de 2,0 à 23,0 % en poids, en particulier de 3,0 à 20,0 % en poids, rapportés au poids du thermoplastique.

5. Feuille selon la revendication 1, **caractérisée en ce que** comme azurant optique est contenu au moins un dérivé du benzoxazole, de la triazine, de la phénylcoumarine et du bis-styrylbiphényle dans des quantité de 10 à 50 000 ppm, de préférence de 20 à 30 000 ppm, en particulier de 50 à 25.000 ppm, rapportés au poids du thermoplastique cristallisable, et **en ce que** comme autre additif est présent un colorant soluble en une concentration dans le domaine de 10 à 10 000 ppm, de préférence de 20 à 5 000 ppm, en particulier de 50 à 1 000 ppm.

6. Feuille selon la reveridication 5, **caractérisée en ce que** le colorant soluble est bleu.

7. Feuille selon une ou plusieurs des revendications 1 à 6, **caractérisée en ce que** l'enlèvement de matière sur l'arête de coupe des couteaux est <100 µm, de préférence <80 µm et en particulier <75 µm par m² de surface de feuille coupée.

8. Feuille selon la revendication 1, **caractérisée en ce que** les particules de dioxyde de titane possèdent un revêtement d'oxydes inorganiques.

9. Feuille selon une ou plusieurs des revendications 1 à 8, **caractérisée en ce qu'**un régénéré est contenu.

10. Feuille selon une ou plusieurs des revendications 1 à 9, **caractérisée en ce qu'**elle est monocouche.

11. Procédé de fabrication d'une feuille blanche à orientation biaxiale avec une bonne aptitude à la coupe, d'une épaisseur comprise dans le domaine de 10 à 500 µm, dont le composant principal est au moins un thermoplastique cristallisable, **caractérisé en ce que** le thermoplastique cristallisable, contenant ≥ 1,0 % en poids de diéthylèneglycol et/ou ≥ 1,0 % en poids de polyéthylèneglycol et/ou 3 % en poids à 10 % en poids d'acide isophtalique, est moulé d'après un procédé par extrusion avec au moins un oxyde de titane de type anatase comme pigment blanc et au moins un azurant optique, en un film plat de matière fondue, est refroidi rapidement et est solidifié à l'aide d'un rouleau de refroidissement en une pré-feuille amorphe dans une large mesure, **en ce que** cette feuille est ensuite réchauffée de nouveau et étirée au moins une fois dans les directions longitudinale et transversale, puis est thermofixée à des températures de 200 à 280 °C, et est finalement refroidie et enroulée.

12. Procédé selon la revendication 11, **caractérisé en ce que** la feuille est dotée d'au moins une couche de scellement et/ou est revêtue sur une ou sur les deux faces et/ou est traitée sur une ou sur les deux faces par effet corona et est dotée en plus de l'azurant optique d'un colorant soluble.

13. Procédé selon la revendication 11 ou 12, **caractérisé en ce que** le dioxyde de titane du type anatase, l'azurant optique et, le cas échéant, les autres substances, sont dosés dans l'extrudeuse lors de la fabrication de la feuille, sachant qu'une addition par la technologie des mélanges maîtres est préférée.

14. Utilisation d'une feuille selon une ou plusieurs des revendications 1 à 10 pour les revêtements de locaux intérieurs, pour la construction de foires-expositions et pour des articles de foire-exposition, pour des affichages, pour des écriteaux, pour des étiquettes, en construction de magasins et de rayonnages, comme panneaux publicitaires, étiquettes et autres articles publicitaires à courte durée de vie, comme agent de doublage pour des applications alimentaires, pour des applications médicales, dans le secteur du bâtiment, comme feuille de meubles, comme feuille d'emballage ou dans le secteur du surgelé.
